# EUROPÄISCHE PATENTSCHRIFT

(11) **EP 1 763 446 B1**
(45) Veröffentlichungstag und Bekanntmachung des Hinweises auf die Patenterteilung: **19.03.2014**
(21) Anmeldenummer: 05767995.3
(22) Anmeldetag: 29.06.2005
(51) Int. Cl.: B60J 10/02, B60J 10/00

(54) **KUNSTSTOFF-RANDPROFILLEISTE UND MONTAGEKOPF**
PLASTIC EDGE SEALING STRIP AND MOUNTING HEAD
BANDE D'ETANCHEITE EN PLASTIQUE DE BORDURE ET TETE DE MONTAGE

(30) Priorität: 02.07.2004 DE 102004032217
(43) Veröffentlichungstag der Anmeldung: 21.03.2007
(73) Patentinhaber: Kunststoff-Technik Scherer & Trier GmbH & Co. KG, 96247 Michelau (DE)
(72) Erfinder: POLKE, Siegbert, 96247 Michelau (DE)
(74) Vertreter: Prechtel, Jörg
(86) Internationale Anmeldenummer: PCT/EP2005/006999
(87) Internationale Veröffentlichungsnummer: WO 2006/002891

(56) Entgegenhaltungen:
- EP-A- 0 249 560
- EP-A- 1 361 098
- WO-A-00/03885
- WO-A-01/85481
- WO-A-03/008222
- DE-A1- 3 640 889
- DE-A1- 10 322 637
- US-A- 1 875 728

## Beschreibung

Die Erfindung betrifft eine Kunststoff-Randprofilleiste, die insbesondere zwischen dem unteren Rand einer Kraftfahrzeug-Windschutzscheibe und einer Wasserkasten-Abdeckung angeordnet werden kann, und mit der ein Rastelement einer Wasserkasten-Abdeckung verrastet werden kann.

Der untere Rand einer Kraftfahrzeug-Windschutzscheibe verläuft, einer Scheibe folgend, in dreidimensionaler Form. Demnach muss die Kunststoff-Randprofilleiste ebenso in dreidimensionaler Biegung verlaufen, ohne dass Spannungen, ausgehend von der Kunststoff-Randprofilleiste, auf die Glasscheibe übertragen werden. Spannungen die auf die Kraftfahrzeug-Windschutzscheibe wirken, verursachen über die Zeit zumindest ein Loslösen der Kunststoff-Randprofilleiste von der Kraftfahrzeug-Windschutzscheibe. Wenn das Loslösen der Kunststoff-Randprofilleiste nicht erfolgt, kommt es sogar zum Bruch der Kraftfahrzeug-Windschutzscheibe.

Eine derartige, auch als Frontscheibeneinfassprofil bezeichnete, Randprofilleiste ist bekannt, siehe z.B. die Offenbarungsschrift WO 01/85481 A1. Hierbei ist ein Federschenkel eines im Querschnitt hakenförmigen Profilkörpers mit einer Rippe einer Wasserkasten-Abdeckung abdichtend verrastbar und der Profilkörper aus hartem Kunststoffmaterial weist eine Dichtlippe aus dementsprechend weichem Kunststoffmaterial auf, die zwischen der Scheiben-Unterkante und dem oberen Rand der Wasserkasten-Abdeckung angeordnet ist. Der Profilkörper ist mit einer klemmkrafterhöhenden Metalleinlage versehen, die allgemein der Hakenform des Profilkörpers folgt.

Solche Systeme sind relativ steif, und müssen daher vor der Montage an einer Fahrzeugscheibe dreidimensional vorgebogen werden, um die Abweichungen zur Scheibenkontur zu minimieren. Um ein Rückfedern der gebogenen Leiste zu minimieren, sollte diese streckgebogen werden, was aber eine komplizierte Biegevorrichtung und einen zusätzlichen Arbeitsschritt erfordert. In vielen Fällen wird dies deshalb unterlassen mit der Folge einer nicht spannungsfreien Montage.

Daher ist es eine Aufgabe der Erfindung, eine Kunststoff-Randprofilleiste bereitzustellen, die eine einfache und spannungsfreie Montage der Kunststoff-Randprofilleiste an einer Fahrzeugscheibe ermöglichen.

Zur Lösung dieser Aufgabe stellt die Erfindung eine Kunststoff-Randprofilleiste gemäß dem Oberbegriff des Anspruchs 1 bereit, die ein weichmetallähnliches Biegeverhalten aufweist.

Durch ihr weichmetallähnliches Biegeverhalten ist die Randprofilleiste zumindest hauptsächlich inelastisch verformbar, so dass im Gegensatz zu aus dem Stand der Technik bekannten Randprofilleisten eine spannungsfreie Montage der Randprofilleiste an einer Fahrzeugscheibe auch ohne exakte dreidimensionale Vorbiegung möglich ist. Die erforderlichen Biegekräfte selbst bei unregelmäßiger Scheibenkontur sind relativ gering, so dass auch eine manuelle Montage auch ohne Vorbiegen der Randprofilleiste, am besten mit Hilfe des erfindungsgemäßen Montagekopfes, möglich ist.

Es kann vorgesehen sein, dass das Kunststoffmaterial der Randprofilleiste zumindest bereichsweise mit einem aktiven Füllstoff, welcher die Werkstoffeigenschaften beeinflusst, verstärkt ist. Der Füllstoff kann faserförmig (z.B. Glas- oder Mineralfaser) oder plättchenförmig (z.B. Talkum) beschaffen sein. Dabei kann der Füllstoffanteil zwischen 10 und 40 %, besser zwischen 15 und 30 %, am besten bei etwa 20 % Gewichtsanteil liegen.

Die Füllstoffverstärkung des halbhart eingestellten Kunststoffmaterials bewirkt das weichmetallähnliche Verhalten, wobei angenommen wird, dass dies darauf zurückzuführen ist, dass bei einer abbiegungsbedingten Dehnung eines Volumenbereichs der Leiste die die Füllstofffasern bzw. -plättchen umschließenden Mikrokanäle dementsprechend verlängert werden, jedoch aufgrund elastischer Rückfederung des Kunststoffmaterials in den über die Faserenden vorstehenden Abschnitten nach innen zusammenschrumpfen. Wird der Abbiegevorgang beendet, so wird das elastische Rückfedern in diesen Bereichen weitgehend dadurch unterbunden, dass die Füllstofffasern bzw. -plättchen nicht mehr in die zusammengeschrumpften Endabschnitte eintreten können.

Darüber hinaus weist das füllstoffverstärkte Kunststoffmaterial nahezu gleiches thermisches Ausdehnungsverhalten auf wie die klemmkrafterhöhende Metalleinlage, so dass die erfindungsgemäße Profilleiste auch bei Temperaturänderungen ihre Form beibehält. Dies steht im starken Gegensatz zur bekannten Profilleiste, bei der Temperaturänderungen zu bimetallähnlicher Verformung der Leiste führen bzw. zum Aufbau von Spannungen bei montierter Leiste. Diese Spannungen können Beschädigungen der Glasscheibenränder (Ausbrechen der Scheibenränder) zur Folge haben.

Das füllstoffverstärkte Kunststoffmaterial kann dabei vorzugsweise aus einem Thermoplasten, am besten aus PVC gebildet sein. Das Kunststoffmaterial der Randprofilleiste kann dabei zumindest bereichsweise halbhart eingestellt sein, das heisst mit einer Shore(A)-Härte von 70 bis Shore(D)-Härte von 75, besser mit einer Shore(D)-Härte von 40 bis 70, am besten mit einer Shore(D)-Härte von etwa 60, bemessen nach DIN EN ISO 750 868.

Die klemmkrafterhöhende Metalleinlage kann ein vorzugsweise rollverformtes Aluminium- oder Stahlprofil umfassen. Ferner kann vorgesehen sein, dass die klemmkrafterhöhende Metalleinlage von einem zumindest angenähert U-förmigen Profil gebildet ist, welches den Federschenkel mit dem Hauptschenkel verbindet, so dass der Anlageschenkel im Wesentlichen ohne klemmkrafterhöhende Metalleinlage ausgebildet ist. Durch diese Geometrie ist der in der Biege-Ebene liegende und deshalb besonders biegekritische Anlageschenkel, der mit seiner Anlagefläche spannungsfrei an der Innenfläche der Fahrzeugscheibe anliegen soll, wesentlich leichter biegbar, was die Montage erleichtert. Gleichzeitig garantiert die klemmkrafterhöhende Metalleinlage auf Dauer die Klemmkraft nach Aufnahme des Rastelements zwischen Federschenkel und Hauptschenkel.

Weiterhin kann vorgesehen sein, dass der Anlageschenkel zumindest auf einem Teil der Randprofilleistenlänge mit Materialschwächungen, vorzugsweise Randausnehmungen ausgebildet ist. Hierbei kann der Anlageschenkel beispielsweise zahnförmig ausgestanzt werden, um die Flexibilität des Profils zu erhöhen. Außerdem kann der Anlageschenkel an seiner von der Fahrzeugscheibe abgewandten Seite mit wenigstens einer, vorzugsweise im Wesentlichen hakenförmigen, Ausformung versehen sein für eine formschlüssige Verbindung mit einem aushärtbarem Scheibenkleber an der Innenfläche der Fahrzeugscheibe. Diese Ausformung sorgt für zusätzliche Stabilität der Verbindung der Randprofilleiste mit der Fahrzeugscheibe und ggf. der Karosserie. Der Anlageschenkel wird hierbei zunächst durch doppelseitiges Klebeband mit der Scheibeninnenfläche verklebt, so dass die Randprofilleiste während des Aushärtens des Scheibenklebers fest mit der Innenfläche der Fahrzeugscheibe verbunden ist und ein Andrücken der Profilleiste an die Fahrzeugscheibe bis zum vollständigen Aushärten des Scheibenklebers daher entfallen kann.

Fahrzeugscheiben werden aus Sicherheitsgründen zumeist mehrlagig ausgebildet (z.B. Verbundglasscheibe), wobei in vielen Fällen zwischen zwei Scheibenlagen eine Kunststofffolienlage angeordnet wird, die im Falle eines Aufpralls eines Gegenstands oder eines Körperteils auf die Scheibe für den Zusammenhalt der Scheibenbruchstücke sorgt. Bei bekannten Randprofilleisten, wie beispielsweise der eingangs erläuterten Randprofilleiste, wird die Scheibe durch eine im Kantenbereich zwischen Schmalseite und Außenfläche an die Schmalseite abdichtend angreifende Dichtlippe gegen Wassereintritt abgedichtet. Die Dichtwirkung ist jedoch nicht unter allen Umständen gewährleistet, so dass Wasser eindringen kann und unter Umständen auch zwischen die Lagen der mehrlagigen Fensterscheibe kriecht. Dies kann unter Umständen zur Beschädigung der Fahrzeugscheibe führen.

Um die Abdichtung zu verbessern, wird bei einer Kunststoffrandprofilleiste der vorstehend beschriebenen Art auch vorgeschlagen, dass der Hauptschenkel fahrzeugscheibenseitig mit einem vorzugsweise dauerklebenden und nicht aushärtenden Scheibenumfangskleber zur klebenden Verbindung mit der Schmalseite der Fahrzeugscheibe versehen ist. Der Scheibenumfangskleber verhindert nicht nur ein Eindringen von Wasser in den Bereich zwischen Leiste und Scheibe, sondern darüber hinaus schützt er die Scheiben gegen Eindringen von Feuchtigkeit zwischen die Lagen. Diese Lösung ist somit auch generell für Randprofilleisten mit Hauptschenkel, Federschenkel und Anlageschenkel einsetzbar, die kein weichmetallähnliches Biegeverhalten aufweisen.

Der Scheibenumfangskleber kann einen Haftschmelzklebstoff, also einen nicht aushärtenden und dauerhaft klebfähigen Klebstoff umfassen, der bei der Herstellung des Profils unter Wärmeeinwirkung appliziert wird. Der Klebstoff wird bei Montage verpresst und fließt unter dem Einfluß von Druck und Zeit, so dass er die Schmalseite, insbesondere im Bereich der Trennebenen zwischen den Lagen zuverlässig abdeckt und ggf. sogar geringfügig zwischen die Lagen eindringt und damit zuverlässig gegen Eindringen von Wasser aber auch Luft isoliert.

Der Scheibenumfangskleber kann weiterhin in Richtung zur Außenfläche der Fahrzeugscheibe hin mit einer Abdeckung versehen sein, die bei der Montage der Profilleiste an die Scheibe den Scheibenumfangskleber auf die der Scheibeninnfläche zugewandten 2/3 der Scheiben-Schmalseite verteilt wird und das Herausquellen des Klebers in Richtung zur Scheibenaußenseite verhindert. An der Scheibenaußenseite sind daher keine Kleberspuren sichtbar. Außerdem schützt diese Abdeckung einen ggf. verwendeten Haftkleber während Handling und Transport der Profilleiste.

Weiterhin kann im Bereich zwischen Federschenkel und Hauptschenkel, vorzugsweise im Verbindungsbereich beider Schenkel, ein Rastelementkleber vorgesehen sein. Am Federschenkel und/oder am Hauptschenkel kann außerdem eine bevorzugt weich eingestellte Kunststoffnoppe vorgesehen sein zur lösbaren Fixierung des eingesteckten Rastelements des Anschlussteils. Sowohl der Rastelementkleber als auch die Kunststoffnoppe können dabei eine zusätzliche Abdichtung des Rastelements bewirken.

Um einen Montagekopf zu erhalten, der eine einfache und spannungsfreie Montage einer Kunststoff-Randprofilleiste, bevorzugt aber nicht notwendigerweise der vorstehend beschriebenen Art, an einer Fahrzeugscheibe ermöglicht, wird ein Montagekopf zur Anbringung einer Kunststoff-Randprofilleiste, insbesondere einer Randprofilleiste wie oben beschrieben, am Rand einer Fahrzeugscheibe, insbesondere am unteren Rand einer Kraftfahrzeug-Windschutzscheibe vorgeschlagen, der umfasst:
- einen Einführschlitz sowohl für die Randprofilleiste als auch für einen Randbereich der Fahrzeugscheibe,
- einen Abstandshalter im Bereich der Randprofilleisten-Einführseite am Einführschlitz, um einen mit einem Scheibenkleber versehenen Anlageschenkel der Randprofilleiste in Abstand zu einer Innenfläche der Fahrzeugscheibe zu halten, und
- eine dem Abstandshalter nachgeschaltete Andrückeinrichtung zum Andrücken des Anlageschenkels an die Innenfläche der Fahrzeugscheibe in einer Andrückstellung der Andrückeinrichtung.

Ein derartiger Montagekopf eignet sich zur manuellen Montage einer Randprofilleiste an den unteren Rand einer Fahrzeugscheibe, wodurch eine aufwendige Montagestation mit mehrstufigem Funktionsablauf entfallen kann. In Verbindung mit einer erfindungsgemäßen Randprofilleiste, die ein weichmetallähnliches Biegeverhalten aufweist, kann außerdem eine aufwendige dreidimensionale Vorbiegung der Randprofilleiste entfallen, so dass die Profilleiste je nachdem wie der Kurvenverlauf der Scheibe ist, auf die die Randleiste aufgebracht werden soll, entweder nur zweidimensional vorgebogen oder als gerades Teil, ohne die Notwendigkeit von Sonderverpackungen und mit reduzierten Frachtkosten, geliefert werden kann. Der Biege- und Montagevorgang kann effizient direkt beim Fahrzeugscheibenhersteller erfolgen.

Bei dem Montagekopf kann die Andrückeinrichtung zwischen der Andrückstellung und einer Rückzugsstellung verstellbar sein. Diese Verstellbarkeit der Andrückeinrichtung vereinfacht die Montage der Randprofilleiste, da die Fahrzeugscheibe und die Randprofilleiste zu Beginn der Montage erst im Montagekopf positioniert werden können, ohne dass es zu einer ungewollten Verklebung der Randprofilleiste mit der Fahrzeugscheibe kommt.

Weiterhin kann die Andrückeinrichtung eine Druckrolle umfassen. Die Druckrolle kann dabei an einem Exzenterteil drehbar gelagert oder an einem linearen Verstellmechanismus befestigt sein, die jeweils mit einem Handhebel versehen sein können. Die Druckrolle kann ferner federnd gelagert sein mit Vorspannung in die Andrückstellung. Sie kann alternativ oder zusätzlich aus elastischem Material gebildet sein. Durch diese Maßnahme wird eine definierte Montage-Leistenandruck-Kraft sichergestellt.

Weiterhin können am Montagekopf wenigstens eine, vorzugsweise mehrere Laufrollen zur Anlage an der von der Fahrzeugscheibe abgewandten Außenseite der Randprofilleiste vorgesehen sein. Durch diese Laufrollen kann der Montagekopf reibungsarm entlang der Fahrzeugscheibenkante bewegt werden, so dass das Randprofil kontinuierlich auf die Scheibenkante aufgeklebt werden kann.

Weiterhin kann zur Verbesserung der Ergonomie am Montagekopf ein Griffteil vorgesehen sein, vorzugsweise an der vom Einführschlitz abgewandten Seite des Montagekopfs. Mittels dieses Griffteils, oder auch ohne, kann Druck in Richtung der Scheibenkante ausgeübt werden, so dass eine spaltfreie, bzw. sehr spaltarme Montage der Randprofilleiste an die Fahrzeugscheibe erreichbar ist. Durch die kompakte Form des Montagekopfs, insbesondere durch den geringen Abstand des Griffs bzw. der Hand des Benutzers von der Scheibenkante, kann hierbei eine ungewollte Verkippung des Montagekopfs verhindert werden.

Die vorliegende Erfindung wird im folgenden anhand der in den beigefügten Zeichnungen dargestellten bevorzugten, keinesfalls einschränkend zu verstehenden Ausführungsformen beschrieben. Es zeigt:
- Figur 1: eine erfindungsgemäße Kunststoff-Randprofilleiste;
- Figur 2: die Randprofilleiste aus Figur 1 in eingebautem Zustand zwischen einer Fahrzeugscheibe und einer Wasserkasten-Abdeckung;
- Figur 3: die Randprofilleiste aus Figur 1 nach der Montage an die Fahrzeugscheibe, mit einem zwischen Federschenkel und Hauptschenkel der Randprofilleiste eingeführten Keder;
- Figur 4: eine seitliche Schnittansicht des Montagekopfs;
- Figur 5: einen Schnitt entlang der Linie V-V in Figur 4;
- Figur 6: einen Schnitt entlang der Linie VI-VI in Figur 5;
- Figur 7: einen Schnitt entlang der Linie VII-VII in Figur 4;
- Figur 8: einen Schnitt entlang der Linie VIII-VIII in Figur 4; und
- Figur 9: eine Schnittansicht entsprechend Figur 4, wobei sich die Druckrolle des Montagekopfs in der Andrückstellung befindet.

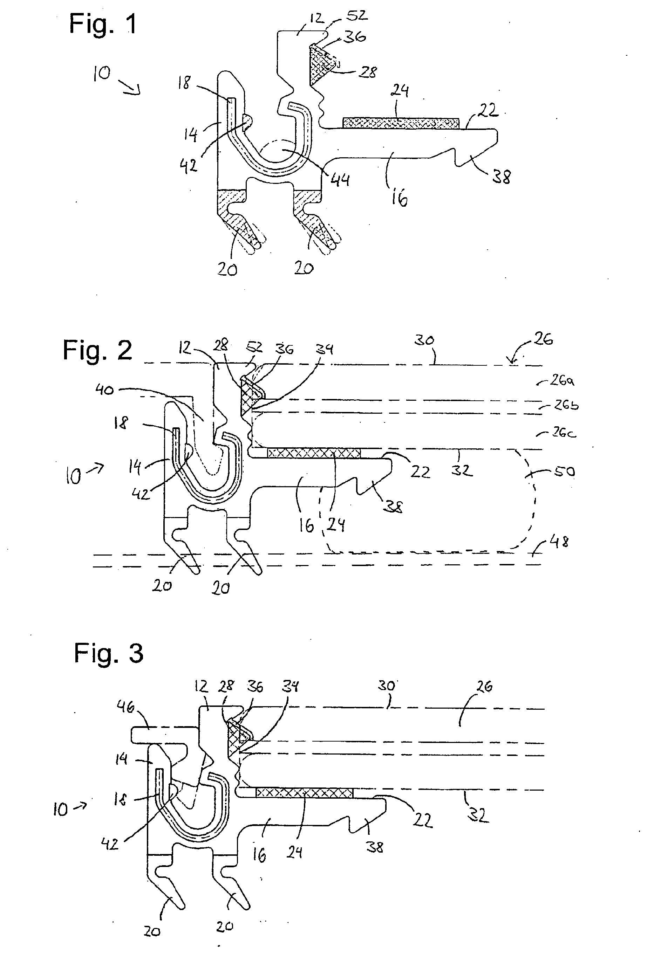

Die in Figur 1 gezeigte Randprofilleiste 10 umfasst einen Hauptschenkel 12, einen Federschenkel 14 und einen Anlageschenkel 16, die im Wesentlichen aus einem füllstoffverstärkten, längenstabilisierten thermoplastischen Kunststoff (z.B. glasfaserverstärktes PVC) bestehen. Dieser Kunststoff ist füllstoffverstärkt mit einem Gewichtsanteil von 20 % und weist eine Shore (D)-Härte von 60 auf. Die Randprofilleiste wird in einem Extrusionsprozess hergestellt, bei dem sich die Füllstofffasern oder -plättchen vorzugsweise in der Extrusionsrichtung, also in Längsrichtung der Randprofilleiste 10 ausrichten. Dies verstärkt das weichmetallähnliche Biegeverhalten der Randprofilleiste bei Biegung um eine zur Extrusionsrichtung senkrechte Achse. Da die Krümmung der Scheibenkante hauptsächlich um eine solche Achse verläuft, ist dieser Effekt vorteilhaft für eine spannungsfreie Montage der Randprofilleiste 10.

Eine im Querschnitt U-förmige klemmkrafterhöhende Metalleinlage 18 aus einem rollverformten Aluminiumprofil erstreckt sich in den Hauptschenkel 12 und den Federschenkel 14. Der Anlageschenkel 16 ist also nicht mit einer klemmkrafterhöhenden Metalleinlage versehen. Elastische Dichtlippen 20 zur Abstützung und Abdichtung der Randprofilleiste an einer Karosserie 48 (siehe Figur 2) eines Fahrzeugs sind im Verbindungsbereich von Hauptschenkel 12 und Federschenkel 14 vorgesehen und können als Abstützung des Verbundes von Scheibe 26 und Randprofilleiste 10 auf der Karosserie 48 dienen.

An einer Anlagefläche 22 des Anlageschenkels 16 ist ein doppelseitiges Klebeband 24 angebracht zur Verklebung der Randprofilleiste mit einer Fahrzeugscheibe 26, wie in Figur 2 gezeigt. Die Fahrzeugscheibe, beispielsweise eine Windschutzscheibe, besteht aus drei Schichten 26a, 26b, 26c wobei eine obere Glasplatte 26a und eine untere Glasplatte 26c mittels einer Kunststofffolie 26b verbunden sind, die bei Bruch der Scheibe die Scheibenbruchstücke zusammenhält und so die Verletzungsgefahr für Fahrer und Insassen des Fahrzeugs verringert.

An der der Fahrzeugscheibe zugewandten Seite des Hauptschenkels 12 ist ein Scheibenumfangskleber 28 angebracht, zur Verbindung der Randprofilleiste 10 mit einer die Außenfläche 30 und die Innenfläche 32 der Fahrzeugscheibe 26 verbindenden Schmalseite 34 der Fahrzeugscheibe 26. Bei dem Scheibenumfangskleber 28 handelt es sich vorzugsweise um einen dauerklebenden Haftschmelzkleber. Alternativ kann auch ein Haftkleber, wie beispielsweise PU-Kleber oder Butyl vorgesehen sein. Bei Verwendung eines Haftschmelzklebers kann der Kleber teilweise in die Zwischenräume zwischen den Schichten 26a, 26b, 26c der Fahrzeugscheibe 26 eindringen und diese so gegen Wassereintritt versiegeln. Um das Austreten des Scheibenumfangsklebers 28 in Richtung der Außenfläche 30 der Fahrzeugscheibe 26 zu verhindern, ist eine Abdeckung 36 vorgesehen. Diese Abdeckung 36 kann, wie in Figur 1 angedeutet, auch verkürzt ausgeführt sein, um das Eindringen des Haftschmelzklebers in die Zwischenräume zwischen den Schichten 26a, 26b, 26c der Fahrzeugscheibe 26 zu erleichtern.

Zur verbesserten Flexibilität kann der Anlageschenkel 16 mit (nicht gezeigten) Ausnehmungen am äußeren Rand versehen sein, beispielsweise mit zahnförmigen Ausstanzungen. Diese Ausstanzungen erhöhen die Flexibilität des Anlageschenkels 16 und erleichtern daher die Montage der Randprofilleiste 10 an die Fahrzeugscheibe 26. Das doppelseitige Klebeband 24 wird in diesem Fall erst nach der zahnförmigen Ausstanzung der Anlagefläche 22 aufgebracht. Der Anlageschenkel 16 ist an seinem dem Hauptschenkel abgewandten Ende mit einer hakenförmigen Ausformung 38 versehen, die eine formschlüssige Verbindung mit einem in Figur 2 angedeuteten aushärtbaren Scheibenkleber 50, der an der Innenfläche 32 der Fahrzeugscheiben 26 angebracht werden kann, eingeht.

Wie in Figur 2 gezeigt, greift im Bereich zwischen Federschenkel 14 und Hauptschenkel 12 ein Rastelement 40 einer nicht näher gezeigten Wasserkasten-Abdeckung ein. Eine im Querschnitt abstimmbare, bevorzugt aber nicht notwendigerweise weich eingestellte Kunststoffnoppe 42 sorgt dabei für eine lösbare Fixierung des Rastelements 40 zwischen Federschenkel 14 und Hauptschenkel 12 der Randprofilleiste.

Eine Nase 52 der Randprofilleiste 10, die nach der Montage an einer Anfasung der die Außenfläche 30 und die Schmalseite 84 der Fahrzeugscheibe 26 verbindenden Kante anliegt, sorgt für einen bündigen, durchgehend ebenen Übergang von der Fahrzeugscheiben-Außenfläche 30 zu der Stirnseite des Randprofilleisten-Hauptschenkels 12. Die Außenfläche der Wasserkasten-Abdeckung ist so geformt, dass sie ebenfalls an diese durchgehende Ebene anschließt, so dass die sichtbare Außenfläche von Fahrzeugscheibe 26, Randprofilleiste 10 und Wasserkasten-Abdeckung eine durchgehende Fläche mit nur kleinen Spalten zwischen den einzelnen Elementen bildet.

Wie in Figur 1 angedeutet, kann ein Rastelementkleber 44 vorgesehen sein, der das Rastelement 40 zusätzlich mit der Randprofilleiste 10 verbindet und abdichtet.

Figur 3 zeigt einen Keder 46, bei dem zwei mögliche Formgebungen des zwischen Federschenkel 14 und Hauptschenkel 12 eingreifenden Elements dargestellt sind. Der Keder 46 dient dazu, während des Biegens der Randprofilleiste 10, also entweder während des Vorbiegens entsprechend der Scheibenkontur oder während der Montage der Randprofilleiste 10 an die Fahrzeugscheibe 26 mittels des erfindungsgemäßen Montagekopfs, den Abstand zwischen dem Hauptschenkel 12 und dem Federschenkel 14 konstant zu halten.

Der Keder 46 wird vor Montage des Rastelementes 40 der Wasserkasten-Abdeckung aus der Randprofilleiste 10 entfernt. Dadurch kann trotz der Verformung der Randprofilleiste 10 entsprechend der Scheibenkontur das Rastelement 40 der Wasserkasten-Abdeckung exakt zwischen Federschenkel 14 und Hauptschenkel 12 eingerastet werden.

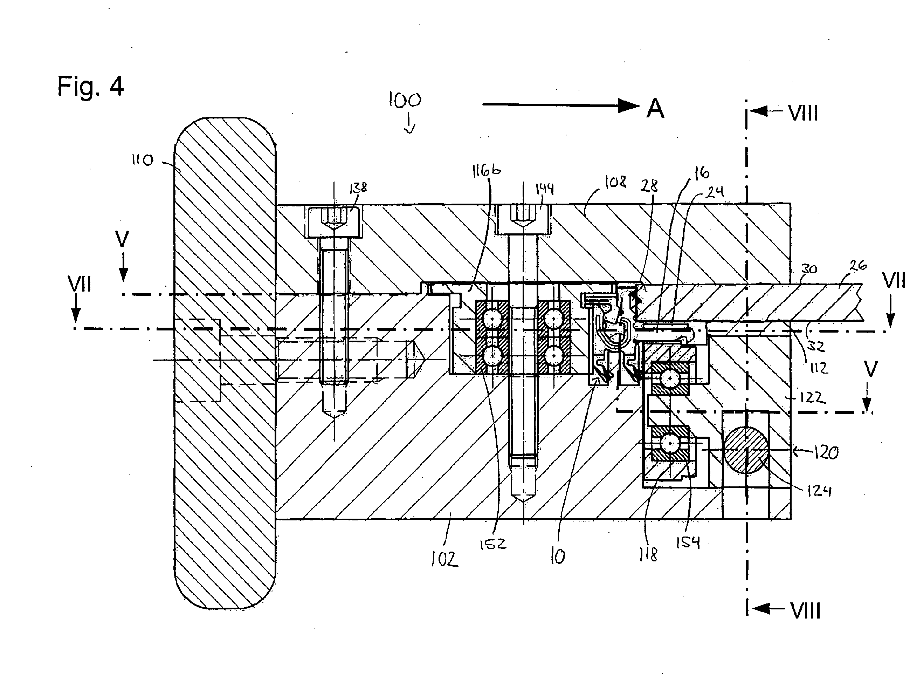

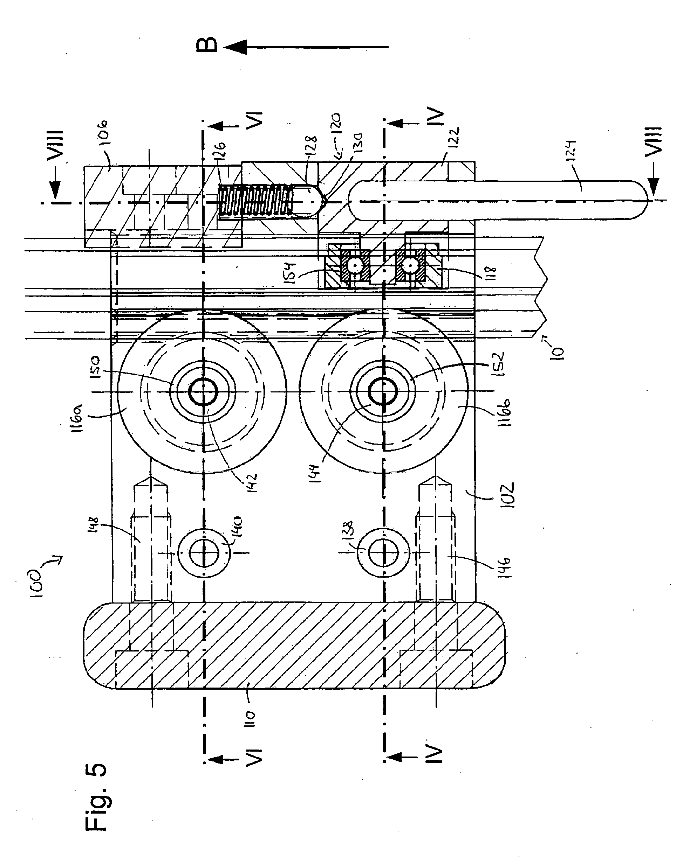

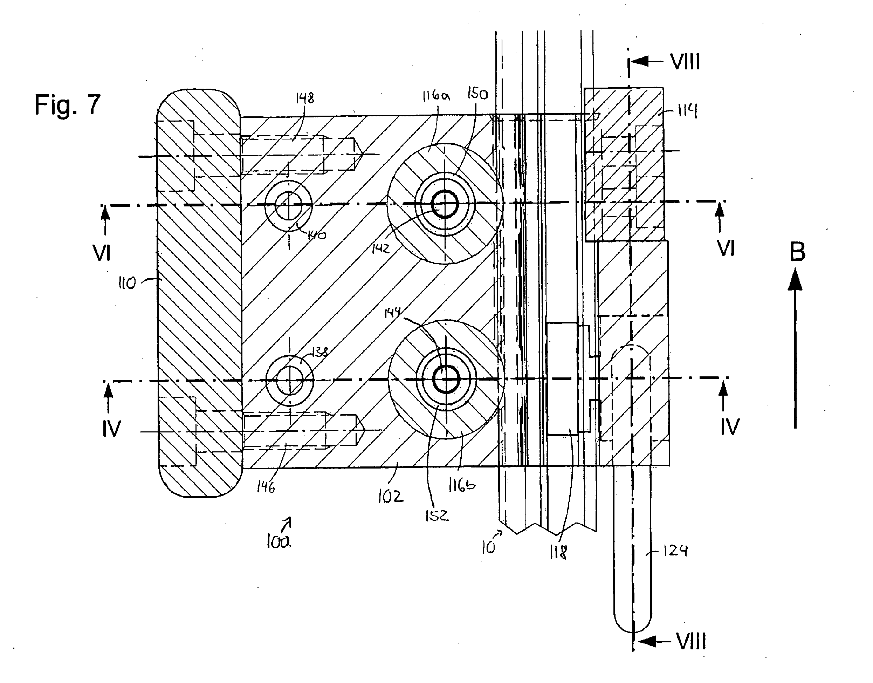

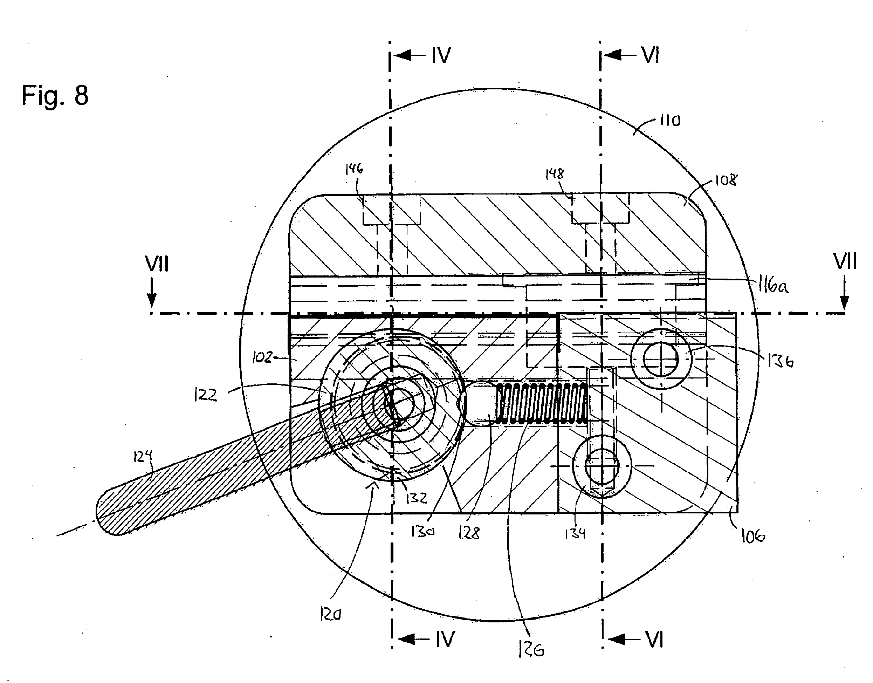

In Figur 4 ist ein Montagekopf 100 dargestellt, der ein Hauptteil 102, ein Endteil 106 (wie in Figur 5 gezeigt) und einen Deckel 108 umfasst. Das Endteil 106 ist, wie in Figur 8 dargestellt, durch Bolzen 134 und 136 mit dem Hauptteil 102 verbunden. Der Deckel 108 ist mit dem Hauptteil 102, wie in Figuren 5 und 7 dargestellt, durch Bolzen 138, 140, 142 und 144 verbunden. An dem der Fahrzeugscheibe 26 abgewandten Ende des Montagekopfs 100 ist ein Griff 110 vorgesehen, der mit dem Hauptteil 102 mittels in Figuren 5 und 7 angedeuteter Schrauben 146 und 148 verbunden ist.

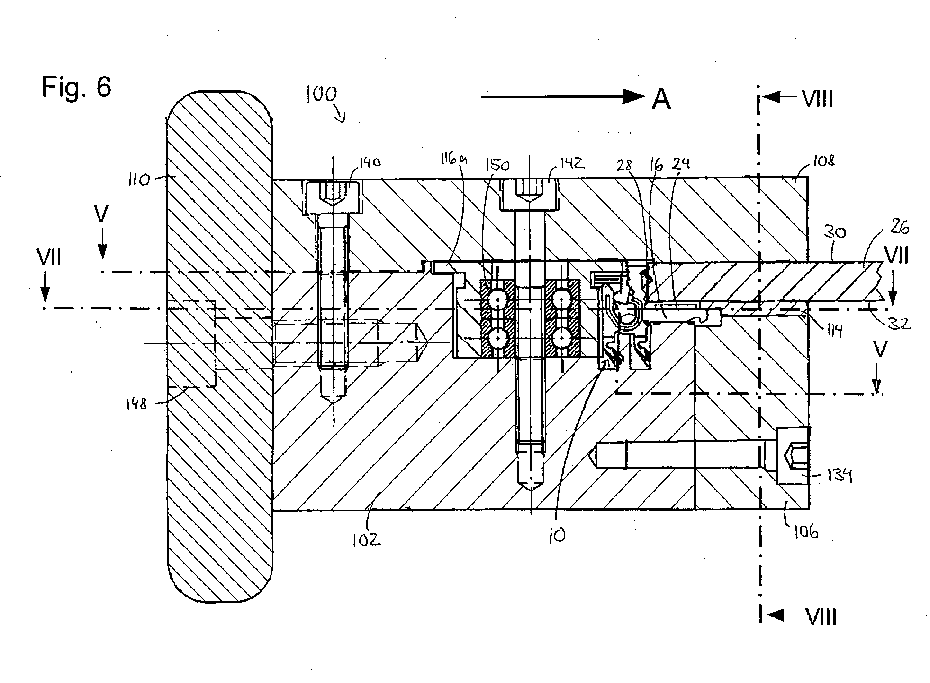

Es ist ein Einführschlitz 112 gemäß der Querschnitts-Geometrie der Randprofilleiste vorgesehen, in den eine Randprofilleiste 10 eingeführt werden kann, und der durch Bewegung des Montagekopfs 100 in die in Figuren 4 und 6 gezeigte Richtung A auf den unteren Rand einer Fahrzeugscheibe 26 aufgesteckt werden kann, um anschließend in der in Figur 5 gezeigten Bewegungsrichtung B bewegt zu werden. Hierdurch wird die Randprofilleiste 10 kontinuierlich während des Vorbeilaufens des Montagekopfs am Fahrzeugscheibenrand befestigt.

Dabei ist an einem in Bewegungsrichtung B vorlaufenden Einführungsende des Montagekopfs 100 ein Abstandshalter 114 vorgesehen, der im Einführungsbereich den Federschenkel 16 und damit das doppelseitige Klebeband 24 auf Abstand zur Innenfläche 32 der Fahrzeugscheibe 26 hält, um hier ein ungewolltes Verkleben zu verhindern. Im Einführbereich ist die Randprofilleiste 10 noch nicht korrekt in Bezug zur Scheibenkante positioniert, so dass eine Verklebung zwischen der Randprofilleiste 10 und der Fahrzeugscheibe 26 in diesem Bereich zu einer nicht passgenauen Montage oder zu Materialspannungen in der Profilleiste 10 führen würde.

Wie in Figuren 5 und 7 gezeigt, liegen eine erste Laufrolle 116a und eine zweite Laufrolle 116b so an der der Fahrzeugscheibe 26 abgewandten Seite der Randprofilleiste 10 an, dass der Montagekopf 100 reibungsarm entlang der in Figur 5 angezeigten Bewegungsrichtung B entlang dem unteren Rand einer Fahrzeugscheibe 26 bewegt werden kann. Die Laufrollen 116a und 116b sind dabei jeweils auf den Bolzen 142 und 144 mittels Kugel- oder Gleitlagern 150 und 152 drehbar gelagert.

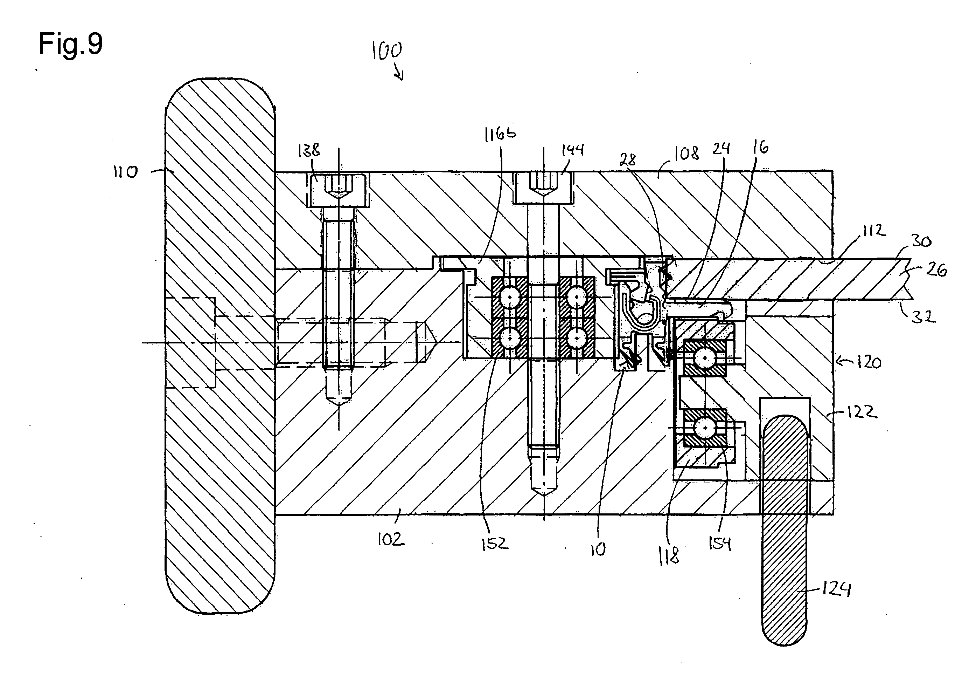

Eine Druckrolle 118 ist mittels eines Kugellagers 154 an einem Exzentermechanismus 120 drehbar gelagert oder an einem nicht dargestellten linearen Verstellmechanismus befestigt, so dass sie zwischen der in Figur 4 gezeigten Rückzugsposition und der in Figur 9 dargestellten Andrückposition verstellbar ist. Dies hat den Vorteil, dass während des Einführens der Randprofilleiste 10 in den Einführschlitz 112 und des Aufsteckens des Montagekopfs 100 auf die Fahrzeugscheibe 26 in Richtung A der Abstand zwischen der Druckrolle 118 (in der Rückzugsposition) und der Fahrzeugscheiben-Innenfläche 32 groß genug ist, um ein einfaches Aufsetzen des Montagekopfs 100 auf die Kante der Scheibe 26 zu ermöglichen, ohne dass es zu einer ungewollten vorzeitigen Verklebung zwischen dem doppelseitigen Klebeband 24 am Anlageschenkel 16 der Randprofilleiste 10 und der Fahrzeugscheiben-Innenfläche 32 kommt. Sind Fahrzeugscheibe 26 und Randprofilleiste 10 im Montagekopf korrekt positioniert, kann dann die Druckrolle 118 aus der in Figur 4 gezeigten Rückzugsposition in die in Figur 9 dargestellte Andrückposition verstellt werden, bei der die Druckrolle 118 den Anlageschenkel der Randprofilleiste 10 und damit das doppelseitige Klebeband 24 an die Fahrzeugscheiben-Innenfläche 32 andrückt und so eine Verklebung zwischen der Randprofilleiste 10 und der Fahrzeugscheibe 26 herstellt.

Wie aus Figur 8 ersichtlich, umfasst der Exzentermechanismus 120 eine drehbar gelagerte Exzenterscheibe 122, die mittels eines Hebels 124 zwischen zwei Positionen verstellt werden kann, bei denen eine von einer Feder 126 an die Exzenterscheibe 122 angedrückte Kugel 128 in jeweils eine der beiden Ausnehmungen 130, 132 gedrückt wird und damit die Exzenterscheibe in einer von zwei Positionen fixiert. Bei der in Figur 8 gezeigten Position, bei der die Kugel 128 in die Ausnehmung 130 eingreift, befindet sich die Druckrolle 118 in der in Figur 4 gezeigten Rückzugsposition. Wird der Hebel 124 gegen den Uhrzeigersinn verdreht, rastet die Kugel 128 in die Ausnehmung 132 ein und bringt damit die Druckrolle 118 in die in Figur 9 gezeigte Andrückposition.

Die Konstruktion des Montagekopfs mit Hauptteil 102 und Endteil 106 ermöglicht dabei eine einfache Montage des Exzentermechanismus 120, da die Exzenterscheibe 122 mit der daran angebrachten Druckrolle 118 durch eine Öffnung im Hauptteil 102 eingeführt werden kann und die Feder 126 mit der Kugel 128 vor Montage des Endteils 106 durch eine Bohrung im Hauptteil 102 eingeführt werden kann, die an eine Sackbohrung im Endteil 106 anschließt, so dass die Feder gegen den Boden der Sackbohrung im Endteil 106 vorgespannt wird. Der separate Deckel 108 ermöglicht ein einfaches Einführen der Laufrollen 116a, 116b in im Hauptteil 102 vorgesehene Sackbohrungen und eine einfachere Fertigung des Einführungsschlitzes 112.

Bei der Montage einer erfindungsgemäßen Randprofilleiste 10 mittels des Montagekopfs 100 entfällt die Notwendigkeit, die Randprofilleiste 10 entsprechend der Scheibenkontur 3-dimensional vorzubiegen, sondern sie kann optional nur in einer Kontur vorgebogen werden, die durch Projektion der Scheiben-Randkontur in eine Ebene erzeugt wird, die der Senkrechten zur Scheibenfläche angenähert ist. Damit liegt das (2-dimensional) vorgebogene Teil in einer flachen Ebene. Unter Umständen kann auch eine überhaupt nicht vorgebogene (d.h. gerade) Randprofilleiste eingesetzt werden. Dies bringt Vorteile für Verpackung und Transport der Randprofilleiste, da das Profil je nach Scheibenkontur teilweise als gerades Teil angeliefert werden kann, welches keine Sonderverpackung benötigt. Bei der Montage, die effizient direkt beim Scheibenhersteller oder bei der Endmontage erfolgen kann, wird zunächst die Randprofilleiste 10 in den Einführschlitz 112 des Montagekopfs 100 eingesteckt, wobei sich die Druckrolle 118 in der in Figur 4 gezeigten Rückzugsstellung befindet. Der Montagekopf wird dann in Richtung A auf die untere Kante einer Fahrzeugscheibe 26 aufgesteckt, bis die Schmalseite 34 der Fahrzeugscheibe 26 den Hauptschenkel 12 der Randprofilleiste 10 berührt. Sind Randprofilleiste 10 und Fahrzeugscheibe 26 im Montagekopf 100 lagenrichtig positioniert, wird mittels des Hebels 124 des Exzentermechanismus 120 die Druckrolle 118 in die Andrückstellung gebracht, bei der sie durch Andrücken des Anlageschenkels 16 der Randprofilleiste 10 an die Fahrzeugscheiben-Innenfläche 32 zu einer Verklebung des doppelseitigen Klebebandes 24 mit der Fahrzeugscheiben-Innenfläche 32 führt.

Schließlich wird der Montagekopf 100 in der Bewegungsrichtung B entlang der Scheibenkante bewegt, so dass eine kontinuierliche Verklebung der Randprofilleiste 10 mit der Fahrzeugscheiben-Innenfläche 32 auf der gesamten Länge der Scheibenkante erreicht wird. Dabei wird jeweils am Einlaufende des Montagekopfs 100 durch den Abstandshalter 114 sichergestellt, dass keine ungewollte Verklebung zwischen dem Anlageschenkel 16 mit dem doppelseitigen Klebeband 24 und der Fahrzeugscheiben-Innenfläche schon vor der Druckrolle 118 stattfindet, da hier die Randprofilleiste 10 noch nicht lagenrichtig in Bezug zur Scheibenkante positioniert ist und noch nicht entsprechend der Kante des Scheibenrands 3-dimensional gebogen ist.

Während der Bewegung des Montagekopfs entlang der Scheibenkante wird die Randprofilleiste 10 zwangsläufig entlang der Scheibenkontur gebogen und durch das Ausüben von Druck auf den Griff 110 kann eine spaltarme bzw. spaltfreie Montage der Randprofilleiste 10 an die Fahrzeugscheibe 26 erreicht werden. Da bei der erfindungsgemäßen Randprofilleiste 10 durch ihr weichmetallähnliches Verhalten nur geringe Biegekräfte zum Verformen notwendig sind, kann die Montage der Randprofilleiste 10 an die Fahrzeugscheibe 26 mittels des Montagekopfs 100 manuell erfolgen, im Gegensatz zu der aufwendigen Montage von bekannten Randprofilleisten, die durch ihre Steifigkeit dreidimensional vorgebogen werden müssen und nicht manuell an der Fahrzeugscheibe angebracht werden können.

## Patentansprüche

1. Kunststoff-Randprofilleiste (10) für eine Fahrzeugscheibe (26), insbesondere für den unteren Rand einer Kraftfahrzeug-Windschutzscheibe (26), umfassend:
- einen Hauptschenkel (12), der zwischen einer die Außenfläche (30) und die Innenfläche (32) der Fahrzeugscheibe (26) verbindenden Schmalseite (34) der Fahrzeugscheibe (26) und einem Anschluss-teil, insbesondere Wasserkastenteil (40), einsetzbar ist,
- einen Federschenkel (14) mit im Wesentlichen gleicher Ausrichtung wie der Hauptschenkel (12), der mit einer klemmkrafterhöhenden Metalleinlage (18) versehen ist, wobei zwischen Federschenkel (14) und Hauptschenkel (12) wenigstens ein Rastelement (40) des Anschlussteils verrastend einsteckbar ist, und
- einen Anlageschenkel (14) zur Anlage an der Innenfläche (32) der Fahrzeugscheibe (26)
**dadurch gekennzeichnet,**
**dass** die Randprofilleiste (10) zumindest bereichsweise ein Kunststoffmaterial aufweist, das füllstoffverstärkt und halbhart eingestellt ist, mit einer Shore(A)-Härte von 70 bis Shore(D)-Härte von 75, was der Randprofilleiste (10) weichmetall-ähnliches Biegeverhalten verleiht.

2. Kunststoff-Randprofilleiste (10) nach Anspruch 1, **dadurch gekennzeichnet, dass** die Randprofilleiste (10) bei den bei der Montage der Randprofilleiste (10) an eine Fahrzeugscheibe (26) auftretenden Kräften hauptsächlich inelastisch verformbar ist.

3. Kunststoff-Randprofilleiste (10) nach Anspruch 1 oder 2, **dadurch gekennzeichnet, dass** der Füllstoff faserförmig oder plättchenförmig ist.

4. Kunststoff-Randprofilleiste (10) nach einem der Ansprüche 1 bis 3, **dadurch gekennzeichnet,**
**dass** der Füllstoffanteil zwischen 10 und 40 Prozent, besser zwischen 15 und 30 Prozent, am besten bei etwa 20 Prozent Gewichtsanteil liegt.

5. Kunststoff-Randprofilleiste (10) nach einem der Ansprüche 1 bis 4, **dadurch gekennzeichnet,**
**dass** das füllstoffverstärkte Kunststoffmaterial aus einem Thermoplasten, am besten PVC gebildet ist.

6. Kunststoff-Randprofilleiste (10) nach einem der vorhergehenden Ansprüche, **dadurch gekennzeichnet,**
**dass** das Kunststoffmaterial der Randprofilleiste (10) zumindest bereichsweise halbhart eingestellt ist, mit einer Shore(D)-Härte von 40 bis 70, besser mit einer Shore(D)-Härte von etwa 60.

7. Kunststoff-Randprofilleiste (10) nach einem der vorhergehenden Ansprüche, **dadurch gekennzeichnet,**
**dass** die klemmkrafterhöhende Metalleinlage (18) ein vorzugsweise rollverformtes Aluminium-oder Stahlprofil umfasst.

8. Kunststoff-Randprofilleiste (10) nach einem der vorhergehenden Ansprüche, **dadurch gekennzeichnet,**
**dass** die klemmkrafterhöhende Metalleinlage (18) von einem zumindest angenähert U-förmigen Profil gebildet ist, welches den Federschenkel (14) mit dem Hauptschenkel (12) verbindet, so dass der Anlageschenkel (16) im Wesentlichen ohne die klemmkrafterhöhende Metalleinlage (18) ausgebildet ist.

9. Kunststoff-Randprofilleiste (10) nach einem der vorhergehenden Ansprüche, **dadurch gekennzeichnet,**
**dass** der Anlageschenkel (16) zumindest auf einem Teil der Randprofilleistenlänge mit Materialschwächungen, vorzugsweise Randausnehmungen, ausgebildet ist.

10. Kunststoff-Randprofilleiste (10) nach einem der vorhergehenden Ansprüche, **dadurch gekennzeichnet,**
**dass** der Anlageschenkel (16) an seiner von der Fahrzeugscheibe abgewandten Seite mit wenigstens einer, vorzugsweise im Wesentlichen hakenförmigen, Ausformung (38) versehen ist für eine formschlüssige Verbindung mit einem aushärtbarem Scheibenkleber (50) an der Innenfläche (32) der Fahrzeugscheibe (26).

11. Kunststoff-Randprofilleiste (10) nach einem der vorhergehenden Ansprüche, für eine mehrlagige Fahrzeugscheibe (26),
**dadurch gekennzeichnet,**
**dass** an dem Hauptschenkel (12) fahrzeugscheibenseitig ein wulstförmiger Scheibenumfangskleber (28) zur klebenden Verbindung mit der an dem Wulst herangeführten Schmalseite (34) der Fahrzeugscheibe (26) angebracht ist, wobei der Scheibenumfangskleber (28) einen nicht aushärtenden, dauerhaft klebenden Haftschmelzklebstoff umfasst.

12. Kunststoff-Randprofilleiste (10) nach Anspruch 11, **dadurch gekennzeichnet,**
**dass** der Scheibenumfangskleber (28) in Richtung zur Außenfläche der Fahrzeugscheibe hin mit einer Abdeckung (36) versehen ist.

13. Kunststoff-Randprofilleiste (10) nach einem der vorhergehenden Ansprüche, **dadurch gekennzeichnet,**
**dass** im Bereich zwischen Federschenkel (14) und Hauptschenkel (12), vorzugsweise im Verbindungsbereich beider Schenkel, ein Rastelementkleber (44) vorgesehen ist.

14. Kunststoff-Randprofilleiste (10) nach einem der vorgehenden Ansprüche, **dadurch gekennzeichnet,**
**dass** am Federschenkel (14) und/oder am Hauptschenkel (12) eine Kunststoffnoppe (42) vorgesehen ist zur lösbaren Fixierung des eingesteckten Rastelements (40) des Anschlussteils.

## Claims

1. A plastic border profile strip (10) for a vehicle window (26), in particular for the lower border of a vehicle window (26), comprising:
- a main leg (12), that may be inserted between a narrow side (34) of said vehicle window (26) connecting the outer surface (30) and the inner surface (32) of said vehicle window (26) and an attachment part, in particular a water box part (40),
- a spring leg (14) with substantially the same alignment as said main leg (12), provided with a metal insert (18) increasing the clamping force, at least one latching element (40) of said connection part being latchingly insertable between said spring leg (14) and said main leg (12), and
- an abutment leg (14) for abutment at an inner side (32) of said vehicle window (26), **characterized by**
said border profile strip (10) comprising at least in some zones a plastic material which is reinforced by a filling agent and adapted semi-rigid, with a shore (A) hardness of 70 to a shore (D) hardness of 75, giving said border profile strip (10) bending characteristics similar to soft metal.

2. The plastic border profile strip (10) according to claim 1, **characterized in that** said border profile strip (10) can substantially deform inelastically when confronted with the forces applied during mounting of said border profile strip (10) at a vehicle window (26).

3. The plastic border profile strip (10) according to claim 1 or 2, **characterized by** the filler being fibrous or platelet-shaped.

4. The plastic border profile strip (10) according to one of claims 1 to 3, **characterized by** the filler accounting for between 10 and 40 per cent, preferably between 15 and 30 per cent and most preferred for about 20 per cent proportional weight.

5. The plastic border profile strip (10) according to one of claims 1 to 4, **characterized by** the plastic material reinforced by a filling agent being made of thermoplastic material, preferably of PVC.

6. The plastic border profile strip (10) according to one of the preceding claims,
**characterized by**
the plastic material of said border profile strip (10) being adapted at least partly as semi-rigid with a shore (D) hardness of 40 to 70, preferably with a shore (D) hardness of about 60.

7. The plastic border profile strip (10) according to one of the preceding claims,
**characterized by** the clamping force increasing metal insert (18) comprising a preferably roll-formed aluminium or steel profile.

8. The plastic border profile strip (10) according to one of the preceding claims,
**characterized by**
the metal insert (18) increasing the clamping force being formed by an at least approximately U-shaped profile, connecting the spring leg (14) with the main leg (12) so that the abutment leg (16) is adapted substantially without said clamping force increasing metal insert (18).

9. The plastic border profile strip (10) according to one of the preceding claims,
**characterized by**
the abutment leg (16) being formed at least over part of the border profile strip length with material weaknesses, preferably border recesses.

10. The plastic border profile strip (10) according to one of the preceding claims,
**characterized by**
the abutment leg (16) being provided, at its side opposite said vehicle window, with at least one, preferably substantially hook-like shape (38) for a form-fitting connection with a curable window adhesive (50) at the inner surface (32) of said vehicle window (26).

11. The plastic border profile strip (10) according to one of the preceding claims, for a multi-layer vehicle window (26),
**characterized by**
a bulge-shaped window circumferential adhesive (28) being provided at said main leg (12) at the side of said vehicle window for an adhesive connection to the small side (34) of said vehicle window (26) guided towards said bulge, said window circumferential adhesive (28) comprising a non-curing, durably adhesive hot melt pressure sensitive adhesive.

12. The plastic border profile strip (10) according to claim 11, **characterized in** said window circumferential adhesive (28) being provided with a cover (36) in the direction towards said outer surface of said vehicle window.

13. The plastic border profile strip (10) according to one of the preceding claims,
**characterized by**
a latching element adhesive (44) being provided in the area between said spring leg (14) and said main leg (12), preferably in the connecting area of both legs.

14. The plastic border profile strip (10) according to one of the preceding claims,
**characterized by**
a plastic knob (42) being provided at the spring leg (14) and/or said main leg (12) for a releasable fixation of said inserted latching element (40) of said connection part.

## Revendications

1. Rebord profilé en matière plastique (10) pour une vitre de véhicule (26), en particulier pour le bord inférieur d'un pare-brise de véhicule automobile (26), comprenant
- une branche principale (12), qui peut être insérée entre un côté étroit (34) de la vitre de véhicule (26), reliant la face extérieure (30) et la face intérieure (32) de la vitre de véhicule (26), et une pièce de raccord, en particulier une partie de collecteur d'eau (40),
- une branche à ressort (14), avec essentiellement la même orientation que la branche principale (12), qui est dotée d'un insert métallique (18) augmentant la force de serrage, au moins un élément d'encliquetage (40) de la pièce de raccord pouvant être inséré avec verrouillage entre la branche à ressort (14) et la branche principale (12), et
- une branche d'appui (14) destinée à s'appuyer sur la face intérieure (32) de la vitre de véhicule (26),
**caractérisé en ce que** le rebord profilé (10) présente au moins localement un matériau de matière plastique, qui est renforcé par une matière de charge et qui est réglé à un niveau demi-dur, avec une dureté Shore (A) de 70 à une dureté Shore (D) de 75, ce qui confère au rebord profilé (10) une flexibilité analogue à celle d'un métal doux.

2. Rebord profilé en matière plastique (10) selon la revendication 1, **caractérisé en ce que** le rebord profilé (10) est déformable de façon principalement non élastique sous les forces qui sont exercées lors du montage du rebord profilé (10) sur une vitre de véhicule (26).

3. Rebord profilé en matière plastique (10) selon la revendication 1 ou 2, **caractérisé en ce que** la matière de charge se trouve sous forme de fibres ou sous forme de plaquettes.

4. Rebord profilé en matière plastique (10) selon l'une quelconque des revendications 1 à 3, **caractérisé en ce que** la proportion de matière de charge se situe entre 10 et 40 pour cent, de préférence entre 15 et 30 pour cent, et est de préférence encore d'environ 20 pour cent en poids.

5. Rebord profilé en matière plastique (10) selon l'une quelconque des revendications 1 à 4, **caractérisé en ce que** le matériau de matière plastique renforcé par une matière de charge est formé en un thermoplastique, de préférence en PVC.

6. Rebord profilé en matière plastique (10) selon l'une quelconque des revendications précédentes, **caractérisé en ce que** le matériau de matière plastique du rebord profilé (10) est au moins localement réglé à un niveau demi-dur, avec une dureté Shore (D) de 40 à 70, de préférence avec une dureté Shore (D) d'environ 60.

7. Rebord profilé en matière plastique (10) selon l'une quelconque des revendications précédentes, **caractérisé en ce que** l'insert métallique augmentant la force de serrage (18) comprend un profilé en aluminium ou en acier de préférence déformé par roulage.

8. Rebord profilé en matière plastique (10) selon l'une quelconque des revendications précédentes, **caractérisé en ce que** l'insert métallique augmentant la force de serrage (18) est formé par un profilé au moins approximativement en forme de U, qui relie la branche à ressort (14) à la branche principale (12), de telle manière que la branche d'appui (16) soit réalisée essentiellement sans l'insert métallique augmentant la force de serrage (18).

9. Rebord profilé en matière plastique (10) selon l'une quelconque des revendications précédentes, **caractérisé en ce que** la branche d'appui (16) est réalisée, au moins sur une partie de la longueur du rebord profilé, avec des amincissements du matériau, de préférence avec des évidements du bord.

10. Rebord profilé en matière plastique (10) selon l'une quelconque des revendications précédentes, **caractérisé en ce que** la branche d'appui (16) est munie, sur son côté situé à l'opposé de la vitre de véhicule, d'au moins un profilage (38), de préférence essentiellement en forme de crochet, en vue de la liaison par complémentarité de forme avec une colle à vitre (50) durcissable sur la face intérieure (32) de la vitre de véhicule (26).

11. Rebord profilé en matière plastique (10) selon l'une quelconque des revendications précédentes, **caractérisé en ce qu'**une colle de pourtour de vitre (28) en forme de cordon est déposée sur la branche principale (12) du côté de la vitre de véhicule, pour l'assemblage collé avec le côté étroit (34) de la vitre de véhicule (26) appliqué sur le cordon, la colle de pourtour de vitre (28) comprenant une colle fusible ne durcissant pas et collant durablement.

12. Rebord profilé en matière plastique (10) selon la revendication 11, **caractérisé en ce que** la colle de pourtour de vitre (28) est dotée d'un recouvrement (36) en direction de la face extérieure de la vitre de véhicule.

13. Rebord profilé en matière plastique (10) selon l'une quelconque des revendications précédentes, **caractérisé en ce qu'**il est prévu une colle pour élément d'encliquetage (44) dans la région comprise entre la branche à ressort (14) et la branche principale (12), de préférence dans la région de liaison des deux branches.

14. Rebord profilé en matière plastique (10) selon l'une quelconque des revendications précédentes, **caractérisé en ce qu'**il est prévu un bossage en matière plastique (42) sur la branche à ressort (14) et/ou sur la branche principale (12) pour la fixation amovible de l'élément d'encliquetage (40) inséré de la pièce de raccord.
